# EUROPÄISCHE PATENTSCHRIFT

(11) **EP 1 171 697 B1**
(45) Veröffentlichungstag und Bekanntmachung des Hinweises auf die Patenterteilung: **01.06.2005**
(21) Anmeldenummer: 01919116.2
(22) Anmeldetag: 26.01.2001
(51) Int. Cl.: F01N 3/20, F02B 37/18, F02B 37/20

(54) **HEIZANLAGE**
HEATING SYSTEM
DISPOSITIF DE CHAUFFE

(30) Priorität: 08.02.2000 DE 10005490
(43) Veröffentlichungstag der Anmeldung: 16.01.2002
(73) Patentinhaber: ROBERT BOSCH GMBH, 70442 Stuttgart (DE)
(72) Erfinder: BAEUERLE, Michael, 71706 Markgroenningen (DE); RIES-MUELLER, Klaus, 74906 Bad Rappenau (DE)
(86) Internationale Anmeldenummer: PCT/DE2001/000308
(87) Internationale Veröffentlichungsnummer: WO 2001/059272

(56) Entgegenhaltungen:
- DE-A- 19 520 122
- DE-C- 19 508 013
- FR-A- 2 708 041
- GB-A- 2 292 587
- US-A- 5 571 484
- PATENT ABSTRACTS OF JAPAN vol. 013, no. 202 (M-824), 12. Mai 1989 (1989-05-12) & JP 01 024118 A (YANMAR DIESEL ENGINE CO LTD), 26. Januar 1989 (1989-01-26)
- PATENT ABSTRACTS OF JAPAN vol. 1996, no. 09, 30. September 1996 (1996-09-30) & JP 08 135457 A (MAZDA MOTOR CORP), 28. Mai 1996 (1996-05-28)

## Beschreibung

### Stand der Technik

Die Erfindung geht von einer Heizanlage nach dem Oberbegriff des Anspruchs 1 aus.

In einigen Betriebszuständen einer Brennkraftmaschine, beispielsweise beim Kaltstart, beim Kurzstreckenverkehr oder bei langen Talfahrten von Kraftfahrzeugen, ist der Wärmeeintrag ins Kühlwasser durch die Brennkraftmaschine selbst nicht mehr ausreichend, insbesondere wenn der Wirkungsgrad der Brennkraftmaschine sehr gut ist, wie bei einer direkten Benzineinspritzung, einer Hochdruckdieseleinspritzung mit einem gemeinsamen Hochdruckspeicher oder einer hoch aufgeladenen Brennkraftmaschine mit einem Turbolader, weil geringe Wärmeverluste entstehen. Demzufolge erreichen die Brennkraftmaschine und ihr Katalysator ihre optimalen Temperaturen nicht in der kurzen, zur Verfügung stehenden Zeit oder erst sehr spät, was zu einem erhöhten Kraftstoffverbrauch und zu erhöhten Abgasemissionen führt.

Da bei niedrigen Außentemperaturen erhebliche Wärmemengen benötigt werden, um die Fahrzeugscheiben zu enteisen oder den Fahrzeuginnenraum zu beheizen, sind die Fahrsicherheit und der Fahrkomfort eingeschränkt. Außerdem benötigen zukünftige Antriebskonzepte, z.B. Hybridfahrzeuge, während des Elektrobetriebs zum Beheizen des Innenraums des Kraftfahrzeugs oder des Katalysators eine zusätzliche Wärmequelle. Derzeit wird diese Problematik vorwiegend mit chemischen oder elektrischen Zuheizern gelöst. Chemische Zuheizer, beispielsweise Brenner, bieten zwar durch die Möglichkeit, auch im Stillstand der Brennkraftmaschine zu heizen, einen hohen Komfort, sind aber relativ teuer. Herkömmliche, elektrische Zuheizer nach dem Prinzip einer Widerstandsheizung sind in der Leistung stark eingeschränkt, weil durch den Generator nicht beliebig viel Strom zur Verfügung gestellt werden kann.

Aus der DE 19 520 122 A1 ist ein Wasserheizgerät zur Erwärmung des Kühlwassers in einer wassergekühlten Brennkraftmaschine für Kraftfahrzeuge bekannt. Der so genannte Zuheizer besitzt einen kraftstoffbetriebenen Brenner und einen Wärmetauscher, der integrierter Bestandteil der Brennkraftmaschine ist. Das aus dem Brenner austretende Abgas wird stromabwärts eines Abgasturboladers kurz vor einem Katalysator in das Abgassystem der Brennkraftmaschine eingeleitet. Dadurch ergibt sich die Möglichkeit, den Katalysator bei einem Kaltstart der Brennkraftmaschine vorzuheizen und unverbrannte Kohlenwasserstoffe des Brennerabgases bei einem Normalbetrieb zu konvertieren.

Ferner ist aus der GB 2 292 587 A eine Brennkraftmaschine mit einem Turbolader bekannt, der mit einem Motor/Generator verbunden ist. Der Abgasturbolader kann somit durch den Motor/Generator angetrieben werden, wenn kein oder zu wenig Ab-gas zur Verfügung steht, und zur Stromerzeugung dienen, wenn zu viel Abgas anfällt. Ferner ist eine Hilfsbrennkammer vorgesehen, deren Abgase kurz vor der Abgasturbine des Abgasturboladers in das Abgassystem eingeleitet werden. Die Hilfsbrennkammer kann einerseits die Leistung der Abgasturbine erhöhen, wenn die Brennkraftmaschine zu wenig Abgas liefert und zum anderen über die Abgasturbine den Motor/Generator antreiben, um Strom zu erzeugen, auch wenn die Brennkraftmaschine außer Betrieb ist.

Aus der JP 8 135 457 A ist eine Brennkraftmaschine mit einem Abgasturbolader bekannt, bei der eine zweite Brennkammer im Abgasstrang vor der Abgasturbine angeordnet ist. Die Brennkammer wird vom gesamten Abgasstrom der Brennkraftmaschine durchströmt und besitzt eine Kraftstoffzufuhr und eine Luftzufuhr, so dass sie bei Bedarf betrieben werden kann, um die Abgasturbine zu beschleunigen und/oder den in Strömungsrichtung hinter der Turbine angeordneten Katalysator zu aktivieren. Da die Brennkammer Bestandteil des Hauptabgasstrangs ist, wird ihre Verbrennung durch den Abgasstrom der Brennkraftmaschine beeinflusst. Ferner kühlen die Abgase in der Brennkammer auf dem Weg zur Abgasturbine ab, sofern die Brennkammer nicht in Betrieb ist.

Aus der FR 2 708 041 ist ein Katalysator bekannt, der eine Brennkammer mit einem Gebläse besitzt. Bevor die Brennkraftmaschine gestartet wird, stellt man fest, ob die Temperatur des Katalysators für seine Funktion ausreichend ist. Falls die Temperatur zu niedrig ist, wird die Brennkammer in Be trieb gesetzt. Wenn die Temperatur ausreichend ist, kann die Brennkraftmaschine gestartet werden.

### Vorteile der Erfindung

Nach der Erfindung ist eine Brennkammer im Bereich eines Abgaskrümmers der Brennkraftmaschine zwischen Auslassventilen und einem Abgaskatalysator über eine Abgasleitung an den Abgaskrümmer der Brennkraftmaschine angeschlossen. Bei Bedarf wird die Brennkammer in Betrieb gesetzt, so dass durch ihre heißen Abgase das Abgassystem der Brennkraftmaschine aufgeheizt wird. Hierzu gehört in erster Linie der Abgaskatalysator, der sehr schnell seine optimale Betriebstemperatur erreicht, aber auch die Abgaskanäle bis zu den Auslaßventilen,wodurch die Brennkraftmaschine selbst, insbesondere ihr Zylinderkopf, schneller ihre Betriebstemperatur erreicht.

Um einen intensiveren Wärmeaustausch zwischen der Brennkammer und der Brennkraftmaschine zu erzielen, ist es zweckmäßig, dass Kühlmittelkanäle eines Wärmetauschers die Brennkammer umgeben und an einen Kühlmittelkreislauf der Brennkraftmaschine angeschlossen sind. Somit kann die Brennkammer zum einen die Brennkraftmaschine schon vor dem Start vorwärmen und zum anderen die an den Kühlmittelkreislauf der Brennkraftmaschine angeschlossene Heizung für den Fahrgastraum versorgen. Über elektronisch angesteuerte Ventile kann die Wärmemenge entsprechend den jeweiligen Prioritäten verteilt werden.

Ferner kann die Brennkammer bei aufgeladenen Brennkraftmaschinen dazu dienen, das Ansprechverhalten des Abgasturboladers zu verbessern, indem sie im unteren Drehzahlbereich die Menge und Energie des Abgases erhöht. Die sich daraus ergebende höhere Drehzahl der Abgasturbine und des Radialverdichters ermöglicht einen höheren Ladedruck, der zu einem besseren Beschleunigungsverhalten der Brennkraftmaschine bei einem günstigeren Wirkungsgrad führt. Die Abgasturbine ist zweckmäßigerweise vor dem Abgaskatalysator angeordnet und ist durch einen Bypass umgehbar, der ein Steuerorgan aufweist. Dadurch kann die Abgasturbine geregelt werden. Ferner können durch den Bypass im Stillstand der Brennkraftmaschine heiße Abgase direkt zum Katalysator gelangen und diesen schon vor dem Start der Brennkraftmaschine auf eine geeignete Betriebstemperatur bringen.

Durch die erfindungsgemäße Heizanlage können somit alle Anforderungen einer modernen Brennkraftmaschine durch eine einzige Brennkammer und mit einem geringen Bauaufwand erfüllt werden.

### Zeichnung

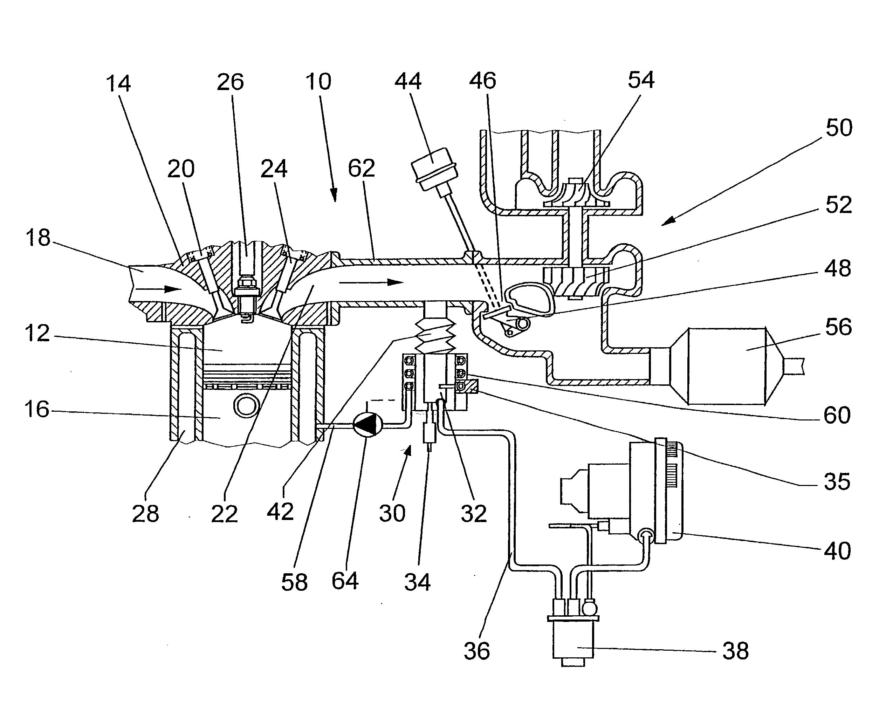

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt in einer schematischen Darstellung einen teilweisen Schnitt durch eine Brennkraftmaschine mit einer erfindungsgemäßen Heizanlage.

### Beschreibung des Ausführungsbeispiels

Die Brennkraftmaschine 10 besitzt Zylinder 12, die zwischen Kolben 16 und einem Zylinderkopf 14 Arbeitsräume bilden, denen über Einlaßkanäle 18 Luft zugeführt wird. Über Auslasskanäle 22 schiebt der Kolben 16 das Abgas in einen Abgaskrümmer 62. Die Einlaßkanäle 18 und die Auslasskanäle 22 werden durch Einlaßventile 20 bzw. Auslaßventile 24 gesteuert. Eine Zündhilfe 26 leitet in Form einer Zündkerze beim Ottoverfahren die Verbrennung des Kraftstoffluftgemisches im Zylinder 12 ein, während eine Zündhilfe 26 in Form einer Glühkerze beim Dieselverfahren zur Vorwärmung der Verbrennungsluft dient.

Eine Brennkammer 32 eines Heizgeräts 30 ist über eine Abgasleitung 42 an den Abgaskrümmer 62 der Brennkraftmaschine 10 angeschlossen. Die Abgasleitung 42 ist zweckmäßigerweise als Metallbalg ausgebildet, um unterschiedliche Wärmedehnungen in Folge unterschiedlicher Temperaturen zwischen der Brennkammer 32 und dem Abgaskrümmer 62 ausgleichen zu können. Der Brennkammer wird Kraftstoff über ein Einspritzventil 34 zugeführt, während ein Luftgebläse 40 über ein Steuergerät 38 und eine Luftzuführung 36 Luft in die Brennkammer 32 fördert. Eine Zündhilfe 35 bringt das Gemisch zur Zündung. Wie bei der Zündhilfe 26 kann es sich hier um eine Zündkerze oder einen Glühstift handeln. Das verbrannte Kraftstoffluftgemisch verlässt die Brennkammer 32 und strömt in den Abgaskrümmer 62, wo es die Menge und Energie des Abgases der Brennkraftmaschine 10 erhöht.

Vor dem Start der Brennkraftmaschine 10 gelangt das Abgas z.B. über einen Bypass 46 zu einem Abgaskatalysator 56, der so schon auf Betriebstemperatur gebracht werden kann, bevor die Brennkraftmaschine 10 startet. Dadurch wird die Abgasemission beachtlich verbessert. Im Bypass 46 ist ein Steuerorgan 48 angeordnet, das von einem elektronisch ansteuerbaren Aktuator 44 betätigt wird. Das Steuerorgan 48 regelt gleichzeitig den Durchsatz durch eine Abgasturbine 52 eines Abgasturboladers 50, die durch die zusätzliche Abgasmenge und Abgasenergie der Brennkammer 32 im unteren Drehzahlbereich der Brennkraftmaschine 10 verstärkt angetrieben werden kann, so dass durch die höhere Drehzahl eines mit der Abgasturbine 52 verbundenen Radialverdichters 54 der Ladedruck in den Einlaßkanälen 18 erhöht werden kann, so dass die Brennkraftmaschine 10 schneller beschleunigt.

Ein Wärmetauscher 60 umgibt die Brennkammer 32. Seine Kühlmittelkanäle sind über eine Verbindungsleitung 58 mit Kühlmittelkanälen 28 und Kühlmittelräumen der Brennkraftmaschine 10 verbunden, so dass die Brennkammer 32 das Kühlmittel des Kühl- und Heizkreislaufs der Brennkraftmaschine 10 aufheizen kann. Zum Umwälzen des Kühlmittels dient vorzugsweise eine elektrisch angetriebene Pumpe 64. Anstatt der Umwälzpumpe wäre auch ein Schaltventil denkbar, das beim Aufheizen den Kühlmittelkreislauf öffnet. Der Wärmetauscher 60 sorgt somit dafür, dass die Brennkraftmaschine 10 während des Stillstands vorgewärmt werden kann, und dass an den Kühlkreislauf angeschlossene Wärmetauscher, z.B. zum Beheizen des Fahrzeuginnenraums oder der Fahrzeugscheiben, während des Stillstands oder beim Start der Brennkraftmaschine mit Wärme versorgt werden.

### Bezugszeichen

- 10: Brennkraftmaschine
- 12: Zylinder
- 14: Zylinderkopf
- 16: Kolben
- 18: Einlasskanal
- 20: Einlassventil
- 22: Auslasskanal
- 24: Auslassventil
- 26: Zündhilfe
- 28: Kühlkanal
- 30: Heizgerät
- 32: Brennkammer
- 34: Einspritzventil
- 35: Zündeinrichtung
- 36: Luftzuführung
- 38: Steuergerät
- 40: Luftgebläse
- 42: Abgasleitung
- 44: Aktuator
- 46: Bypass
- 48: Steuerorgan
- 50: Abgasturbolader
- 52: Abgasturbine
- 54: Radialverdichter
- 56: Abgaskatalysator
- 58: Verbindungsleitung
- 60: Wärmetauscher
- 62: Abgaskrümmer
- 64: Pumpe

## Patentansprüche

1. Heizanlage eines Kraftfahrzeuges, das von einer Brennkraftmaschine (10) angetrieben wird, wobei die Heizanlage zum Erwärmen des Kraftfahrzeugs einschließlich seiner Brennkraftmaschine (10) vorgesehen ist, wobei ein Heizgerät (30) ein Luftgebläse (40) sowie eine Brennkammer (32) mit einer Kraftstoffeinspritzvorrichtung (34) und mit einer Zündeinrichtung (35) umfasst, die Brennkammer (32) über eine Abgasleitung (42) zwischen Auslassventilen (24) der Brennkraftmaschine (10) und einem Abgaskatalysator (56) an den Abgasstrang (62) der Brennkraftmaschine (10) angeschlossen ist und in Abhängigkeit von Betriebsparametern und/oder Umgebungsparameter des Kraftfahrzeugs und/oder der Brennkraftmaschine (10) oder von Betätigungssignalen angesteuert wird, **dadurch gekennzeichnet, dass** die Brennkammer (32) im Bereich eines Abgaskrümmers (62) der Brennkraftmaschine (10) an den Abgasstrang (62) angeschlossen ist.

2. Heizanlage nach Anspruch 1, **dadurch gekennzeichnet, dass** stromabwärts der Einmündung der Abgasleitung (42) in den Abgasstrang (62) eine Abgasturbine (52) eines Abgasturboladers (50) vor dem Abgaskatalysator (56) angeordnet und durch einen Bypass (46) umgehbar ist, der ein Steuerorgan (48) aufweist.

3. Heizanlage nach Ansprüch 2, **dadurch gekennzeichnet, dass** sie während eines Beschleunigungsvorgangs bzw. nach einer Leistungsanforderung an die Brennkraftmaschine (10) angesteuert wird, mit dem Ziel, den Ladedruck zu erhöhen.

4. Heizanlage nach einem der vorhergehenden Ansprüche, **dadurch gekennzeichnet, dass** sie als Standheizung benutzt wird und vor dem Motorstart angesteuert wird.

5. Heizanlage nach einem der vorhergehenden Ansprüche, **dadurch gekennzeichnet, dass** die Abgasleitung (42) der Brennkammer (32) zumindest teilweise als Faltenrohr ausgebildet ist.

6. Heizanlage nach einem der vorhergehenden Ansprüche, **dadurch gekennzeichnet, dass** Kühlmittelkanäle eines Wärmetauschers (60) die Brennkammer (32) umgeben und an einen Kühlmittelkreislauf (28) der Brennkraftmaschine (10) angeschlossen sind.

7. Heizanlage nach Anspruch 5, **dadurch gekennzeichnet, dass** dem Kühlmittelkreislauf (28) der Brennkraftmaschine (10) und/oder dem Wärmetauscher (60) mindestens eine elektrisch angetriebene Pumpe (64) oder ein elektrisch angesteuertes Schaltventil zugeordnet ist.

## Claims

1. Heating system of a motor vehicle which is driven by an internal combustion engine (10), the heating system being provided for heating the motor vehicle, including its internal combustion engine (10), a heating appliance (30) comprising an air blower (40) and a combustion chamber (32) with a fuel injection device (34) and with an ignition device (35), and the combustion chamber (32) being connected to the exhaust train (62) of the internal combustion engine (10) via an exhaust-gas line (42) between outlet valves (24) of the internal combustion engine (10) and an exhaust-gas catalytic converter (56) and being activated as a function of operating parameters and/or ambient parameters of the motor vehicle and/or of the internal combustion engine (10) or as a function of actuation signals, **characterized in that** the combustion chamber (32) is connected to the exhaust train (62) in the region of an exhaust manifold (62) of the internal combustion engine (10).

2. Heating system according to Claim 1, **characterized in that** an exhaust-gas turbine (52) of an exhaust-gas turbocharger (50) is arranged downstream of the issue of the exhaust-gas line (42) into the exhaust train (62) and upstream of the exhaust-gas catalytic converter (56) and can be bypassed by means of a bypass (46) which has a control member (48).

3. Heating system according to Claim 2, **characterized in that** it is activated during an acceleration operation or after a power requirement to be met by the internal combustion engine (10), with the aim of increasing the boost pressure.

4. Heating system according to one of the preceding claims, **characterized in that** it is used as auxiliary heating and is activated before the engine start.

5. Heating system according to one of the preceding claims, **characterized in that** the exhaust-gas line (42) of the combustion chamber (32) is designed at least partially as a quill tube.

6. Heating system according to one of the preceding claims, **characterized in that** coolant ducts of a heat exchanger (60) surround the combustion chamber (32) and are connected to a coolant circuit (28) of the internal combustion engine (10).

7. Heating system according to Claim 5, **characterized in that** at least one electrically driven pump (64) or an electrically activated switching valve is assigned to the coolant circuit (28) of the internal combustion engine (10) and/or to the heat exchanger (60).

## Revendications

1. Installation de chauffage d'un véhicule automobile entraîné par un moteur à combustion interne (10), pour lequel
- l'installation de chauffage assure le chauffage du véhicule y compris de son moteur à combustion interne (10),
- un appareil de chauffage (30) comporte une soufflante (40) ainsi qu'une chambre de combustion (32) équipée d'un dispositif d'injection de carburant (34) et d'une installation d'allumage (35),
- la chambre de combustion (32) est reliée par une conduite de gaz d'échappement (42) installée entre les soupapes d'échappement (24) du moteur à combustion interne (10) et un catalyseur de gaz d'échappement (56) au système d'échappement (62) du moteur à combustion interne (10), et est commandée en fonction des paramètres de fonctionnement et/ou des paramètres d'environnement du moteur à combustion interne et/ou du moteur à combustion interne (10) ou de signaux d'actionnement,
**caractérisée en ce que**
la chambre de combustion (32) est raccordée au niveau d'un collecteur de système d'échappement (62) du moteur à combustion interne (10) à la conduite de gaz d'échappement (62).

2. Installation de chauffage selon la revendication 1,
**caractérisée en ce qu'**
en aval de la ligne de gaz d'échappement 42) dans le système d'échappement (62), une turbine de gaz d'échappement (52) d'un turbocompresseur de gaz d'échappement (50) est prévue en amont du catalyseur de gaz d'échappement (56), et peut être contournée par une dérivation (46) équipée d'un organe de commande (48).

3. Installation de chauffage selon la revendication 2,
**caractérisée en ce qu'**
elle est commandée pendant une opération d'accélération ou après une demande de puissance appliquée au moteur à combustion interne (10) avec pour but d'augmenter la pression de suralimentation.

4. Installation de chauffage selon l'une des revendications précédentes,
**caractérisée en ce qu'**
elle est utilisée comme chauffage statique et est commandée avant le démarrage du moteur.

5. Installation de chauffage selon l'une des revendications précédentes,
**caractérisée en ce que**
la conduite de gaz d'échappement (42) de la chambre de combustion (32) est réalisée au moins en partie sous la forme d'un tube à soufflet.

6. Installation de chauffage selon l'une quelconque des revendications précédentes,
**caractérisée en ce que**
les canaux de liquide de refroidissement d'un échangeur de chaleur (60) entourent la chambre de combustion (32) et sont reliés à un circuit de refroidissement (28) du moteur à combustion interne (10).

7. Installation de chauffage selon la revendication 5,
**caractérisée en ce que**
le circuit de fluide de refroidissement (28) du moteur à combustion interne (10) et/ou l'échangeur de chaleur (60) sont combinés à au moins une pompe électrique (64) ou à une soupape de commutation à commande électrique.
